(19) **Europäisches Patentamt European Patent Office Office européen des brevets**

(11) **EP 4 502 939 B1**

(12) **EUROPEAN PATENT SPECIFICATION**

(45) Date of publication and mention of the grant of the patent:
**04.03.2026 Bulletin 2026/10**

(21) Application number: **23189574.9**

(22) Date of filing: **03.08.2023**

(51) International Patent Classification (IPC):
**G06T 7/11** *(2017.01)*   **G06N 3/045** *(2023.01)*
**G06V 10/774** *(2022.01)*   **G06V 10/82** *(2022.01)*
**G06V 20/70** *(2022.01)*

(52) Cooperative Patent Classification (CPC):
**G06T 7/11; G06N 3/045; G06V 10/774;**
**G06V 10/82; G06V 20/70;** G06T 2207/20081;
G06T 2207/20084

(54) **METHOD FOR GENERATING AN IMAGE FOR TRAINING AND/OR TESTING AN IMAGE SEGMENTATION SYSTEM**

VERFAHREN ZUR ERZEUGUNG EINES BILDES ZUM TRAINIEREN UND/ODER TESTEN EINES BILDSEGMENTIERUNGSSYSTEMS

PROCÉDÉ DE GÉNÉRATION D'UNE IMAGE POUR L'APPRENTISSAGE ET/OU LE TEST D'UN SYSTÈME DE SEGMENTATION D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**05.02.2025 Bulletin 2025/06**

(73) Proprietor: **Robert Bosch GmbH**
**70442 Stuttgart (DE)**

(72) Inventors:
• **Sakmann, Kaspar**
**70469 Stuttgart (DE)**
• **Beluch, William Harris**
**70197 Stuttgart (DE)**
• **Hutmacher, Robin**
**71272 Renningen (DE)**
• **Zhang, Dan**
**71229 Leonberg (DE)**

(56) References cited:
• **MARWANE HARIAT ET AL: "Learning to Generate Training Datasets for Robust Semantic Segmentation", ARXIV.ORG, CORNELL UNIVERSITY LIBRARY, 201 OLIN LIBRARY CORNELL UNIVERSITY ITHACA, NY 14853, 1 August 2023 (2023-08-01), XP091587399**
• **FERNANDEZ VIRGINIA ET AL: "Can Segmentation Models Be Trained with Fully Synthetically Generated Data?", 17 September 2022, SPRINGER INTERNATIONAL PUBLISHING, PAGE(S) 79 - 90, XP047634225**
• **MATEJ GRCI\'C ET AL: "Hybrid Open-set Segmentation with Synthetic Negative Data", ARXIV.ORG, CORNELL UNIVERSITY LIBRARY, 201 OLIN LIBRARY CORNELL UNIVERSITY ITHACA, NY 14853, 28 July 2023 (2023-07-28), XP091573673**

**Description**

Technical field

The invention relates to a computer-implemented method for generating an image for training and/or testing an image segmentations system, a computer-implemented method for training an image segmentation system, a computer implemented method for detecting anomalies in images, a training system, a control system, a computer program and a machine-readable storage device.

Prior art

Tian et al. "Pixel-wise energy-biased abstention learning for anomaly segmentation on complex urban driving scenes". https://arxiv.org/pdf/2111.12264.pdf, 2022 discloses an anomaly segmentation method, named pixel-wise energy-biased abstention learning (PEBAL), that explores pixel-wise abstention learning (AL) with a model that learns an adaptive pixel-level anomaly class, and an energy-based model (EBM) that learns inlier pixel distribution. PEBAL is based on a joint training of EBM and AL, where EBM is trained to output high-energy for anomaly pixels (from outlier exposure) and AL is trained such that these high-energy pixels receive adaptive low penalty for being included to the anomaly class.

Nayal et al. "RbA: Segmenting Unknown Regions Rejected by All" https://arxiv.org/pdf/2211.14293.pdf, 2022 discloses an outlier scoring function called RbA by defining the event of being an outlier as being rejected by all known classes. Experiments show that mask classification improves the performance of the existing outlier detection methods, and the best results are achieved with the proposed RbA.

Li et al. "Intra- & Extra-Source Exemplar-Based Style Synthesis for Improved Domain Generalization", https://arxiv.org/pdf/2307.00648.pdf, 2023 discloses a an exemplar-based style synthesis pipeline to improve domain generalization in semantic segmentation, in particular a masked noise encoder in combination with a StyleGAN2.

Marwane Hariat, et al., "Learning to generate training datasets for robust semantic segmentation", https://arxiv.org/html/2308.02535v4; Fernandez Virginia, et al. "Can segmentation models be trained with fully synthetically generated data?", https://arxiv.org/abs/2209.08256; and Matej Gricic, et al. "Hybrid open-set segmentation with synthetic negative data", arXiv:2301.08555, 2023 disclose some similar embodiments.

Technical background

Perceiving an environment and detecting contents of the environment is an important task in different technical applications, e.g., robotics. A typical goal is to use sensors such as cameras to detect objects, vegetation, or other relevant items, e.g., to not collide with elements of the environment.

Especially for safety-critical applications, such as autonomous driving (AD), the ability to detect unknown objects (Out-of-distribution objects, OoD objects) is critical. This may also be understood as identifying anomalous objects. More specifically, detecting pixels of an unknown or anomalous object in a semantic segmentation scenario is a core perception task for mobile robots such as, e.g., autonomous vehicles.

Semantic segmentation tasks are typically solved by neural networks. It is thus desirable to enable neural networks configured for semantic segmentation to also be able to detect unknown or anomalous pixels so that on overall system using the neural network for modelling an environment can precisely identify unknown or anomalous objects and separate them from the drivable space.

A core difficulty of OoD detection is the vast amount of possible OoD objects compared to the relatively small number of object categories that the neural network is trained on. Moreover, semantic segmentation typically deals with scene-centric input images, i.e., images in which OoD objects co-locate with many other known objects and elements of the environment. This poses an even greater challenge compared to OoD detection on object-centric data (e.g., image classification benchmarks). Another challenge that comes with scene-centric images is class imbalances. For example, road pixels in AD scenes often make up a large part of the training data and bias the neural network towards predicting road. Due to the imbalance in training data, neural networks often exhibit a tendency to predict the majority class for OoD objects found on the road, a critical error that carries the highest level of risk.

A particularly successful technique for detecting unknown or anomalous objects in a semantic segmentation task (also known as anomaly segmentation) is a form of outlier exposure. Namely, while one does not have access to potential OoD scenarios at inference time, there are many ready-to-use datasets different to the training data, that can serve as OoD exemplars during training. For instance, the MS COCO dataset is a popular OoD proxy dataset for training semantic segmentation. For example, it is possible to cut and then paste specific objects comprised by the MS COCO dataset into road scenes to create anomalous examples for, e.g., AD scenes.

The OoD data constructed this way can be used either during training a neural network from scratch or during finetuning of a pre-trained model. The inventors found that using OoD data for training from scratch can degrade the in-distribution generalization performance of the neural network (i.e., its semantic segmentation performance on known and/or non-anomalous pixels) and require architectural changes in the neural network. In contrast, the authors found that when using OoD data only during finetuning a pre-trained neural network, the neural network is usually under the constraint of small weight changes and thus less prone to overfitting.

Based on these findings, the invention advantageously proposes a new method for generating OoD data by adapting a style of OoD data copy and pasted upon an existing image. The style transfer leads to the training data being more suitable for training to detect unknown or anomalous objects as a neural network trained with this data cannot rely on the style of the pasted content (i.e., that it looks "off" with respect to the rest of the image) to determine whether pixels are anomalous or not. The invention further proposes an advantageous method for training a neural network based on data as generated from the method of generating OoD data.

Disclosure of the invention

In a first aspect, the invention concerns a computer-implemented method for generating a training image and a training label map for training and/or testing an image segmentation system, wherein the method comprises the steps of:

- Obtaining a first image and a first label map corresponding to the first image and obtaining a second image and a second label map corresponding to the second image;
- Determining a third image, wherein the third image is determined by providing the second image as input to a machine learning system, wherein the machine learning system is configured for determining images in the style of the first image based on provided images;
- Determining the training image by replacing pixels from the first image with pixels from the third image, wherein the pixels from the third image are determined based on a class from the second label map;
- Determining the training label map by replacing class labels from the first label map with class labels indicating an anomaly class, wherein the class labels in the first label map are replace for which corresponding pixels in the first image are replaced.

The method may be understood as augmenting the first image with pixels from the second image, wherein the second image is first brought into a similar or same style as the first image. Advantageously, this style alignment between the first image and the second image allows for a realistic embedding of the pixels of the second image into the first image. In other words, the pixels from the third image (i.e., the second image after style alignment) look as if they could actually belong into the first image.

Training an image segmentation system with such a generated image increases the diversity of training data and leads to an increased performance of the image segmentation system. Even more advantageously, the copied pixels are marked in the training label map as depicting an anomaly (either through the anomaly class or through the additional indication in the label map), wherein the training label map may then be used for training the image segmentation system for determining whether a specific pixel in a given image is anomalous or not.

Due to the pixels from the third image being in the style of the pixels from the first image, the image segmentation system (60) cannot rely on a style of the replaced pixels as indicator for anomalous pixels and thus advantageously has to learn to reason whether pixels in an image are anomalous or not based on a semantic content of the image (e.g., non-flying objects located in the sky are likely anomalies).

A label map can generally be understood as an annotation of an image, wherein the annotation assigns class labels to a subset of pixels, preferably all pixels, of an image the label map corresponds to. Correspondence can typically be achieved by means of the label map having a same width and height as does the image, wherein each pixel may be assigned a position in the image and may additionally be assigned a class label (e.g., an integer characterizing an index of a class) in the label map, wherein the class label may itself be assigned a position in the label map. The positions may be characterized by indices along a width and height dimension of the image and the label map respectively. The label map may hence be given by a matrix of integers indicating class labels.

A label map corresponding to an image may be understood as the label map comprising classifications for each pixel of the image.

In case the replaced class labels in the first label map are further indicated as resulting from replacement, the indication may be achieved by, e.g., assigning a special class label that simultaneously indicates a corresponding class from the second label map as well as "anomaly" (e.g., by adding a predefined offset to the integer representing the otherwise non-anomalous class). Alternatively, an additional binary map may be provided alongside the generated training label map indicating for each pixel of the generated training image, whether the pixel characterizes an anomaly or not, i.e., whether the pixel has been copied from the third image or not. The binary map may be provided in the form of a matrix of binary or integer elements.

Anomalies may be understood as parts of images (depicted through pixels of the images) which constitute rare, uncommon, or unreasonable objects. Anomalous pixels may be understood as pixels which belong to anomalous objects.

The machine learning system may especially be understood as being configured such that a semantic content of its input is not changed in its output, but a style is changed. For example, the machine learning system may be given by a neural network, which comprises a masked noise encoder and a StyleGAN2, wherein the neural network is further configured (i.e., trained) for changing style of images provided as input.

The term "determining images in the style of the first image based on provided images" may especially be understood in so far as the machine learning system being configured for accepting images as input, wherein the machine learning system then transforms a provided input image into an output image, wherein the output image has a different style from the input image but a similar or same semantic content.

An image can be understood as being obtained by synthesis (e.g., rendering from virtual scenes in a computer) or by being recorded from a sensor, in particular an optical sensor. In this case, images may be understood as outputs of a camera, a lidar, a radar, an ultrasonic sensor, or a thermal sensor.

Obtaining an image may be understood as any way of acquiring the image, e.g., by means of recording it with the respective sensor or retrieving it from a database of images.

The first image may especially be obtained at random from a dataset of first images. This may be understood as the first images having a similar visual style due to being, e.g., being recorded by a same sensor and/or a same environmental condition of the sensor.

Determining the training image by replacing pixels from the first image with pixels from the third image may be understood as providing the image that results from replacing pixels from the first image with the respective pixels of the third image as the training image.

The pixels in the first image, which are replaced by pixels from the third image may be chosen at random. For example, a random position may be chosen in the first image and the pixels from the third image may be superimposed into that position such that a center of the pixels from the third image is located at the random position. In this case, the pixels to be replace in the first image may be understood be determined implicitly. Alternatively, the pixels to be replaced in the first image may be chosen based on a class of the first label map. For example, if the pixels from the third image to be pasted onto the first image constitute pixels of an object, the pixels in the first image may be chosen such that they represent pixels which characterize parts in the first label map that can reasonably comprise objects, e.g., free spaces such as roads, sidewalks or the like.

Alternatively, it is also possible to select a position in the first image that characterizes a part of the first label map that can reasonably comprise objects and the pixels from the third image may be copied into the first image such that a center of the pixels from the third image is located at the position.

In all examples, the center position was merely chosen exemplarily. One may also use other positions, e.g., corners or other desired positions.

Preferably, the pixels to be replaced are determined at random. This expression is also understood as including methods, where a single location in the first image is chosen at random and the pixels from the third image are copied into the first image as described above.

Preferably, replacing class labels from the first label map is achieved by replacing class labels from the first label map with class labels from the second label map, wherein the class labels from the second label map are used for replacement for which corresponding pixels have been used as replacement in the first image, wherein the replaced class labels in the first label map are further indicated as resulting from replacement.

Alternatively, it is also possible to assign a designated "anomaly" class to elements of the training label map for which corresponding pixels in the training image have been determined by copying from the third image.

Preferably, the first image is transformed in an augmentation operation before determining the training image.

The first image may, for example, be cropped or resized before it is subjected to replacement of pixels. The augmentation may be any known augmentation operation. The result of the augmentation operation may then be used as first image for subsequent operations, e.g., for determining the training image. Advantageously, the authors found that the image segmentation system performs even better when training with an augmented first image.

Preferably, the machine learning system determines its output based on providing its input to a masked noise encoder of the machine learning system and providing an output of the masked noise encoder to a StyleGAN2.

The masked noise encoder and the StyleGAN2 may especially be understood as sub-networks of a combined neural network. The architecture of the masked noise encoder may be that of a the pSp encoder. The masked noise encoder may map a provided input image to an extended latent space $W^+$ of a pre-trained StyleGAN2 generator. The pre-trained StyleGAN2 generator may especially be pretrained on images comprising complex scene data such as urban driving scenarios or other similar images.

The inventors found that, advantageously, the combination of masked noise encoder and StyleGAN2 leads to a better style transfer of the style of the first image and hence to a better first training image, which in turn leads to an increased performance of the image segmentation system when using the training image for training or an improved assessment of the generalization capability of the image segmentation system when using the training image during testing of the image segmentation system.

Alternatively, other style transfer machine learning systems may be used on the method as well, e.g., machine learning systems based on diffusion models such as diffusion models configured for interpolating between images.

Preferably, the first image is comprised by a first dataset of first images and the machine learning system is trained to transfer input images into a style of the first images.

This may especially be understood as the method comprising an extra step of training the machine learning system as part of the method for generating the image. Alternatively, it may be understood as obtaining the machine learning system after training on the first images, e.g., by downloading it from a resource on the internet.

Some or all of the preferred embodiments of the method for training as described above may be combined to form further embodiments.

In another aspect, the invention concerns a computer-implemented method for training an image segmentation system, wherein the method comprises the steps of:

- Generating a training image and a corresponding training label map according to the method of any one of the previous claims;
- Supervised training the image segmentation system with the generated training image and the training label map.

The image segmentation system may be configured to perform a semantic segmentation and/or an instance segmentation of a provided input image. This may especially be achieved by the image segmentation system comprising or consisting of a neural network configured for image segmentation and/or instance segmentation. Semantic segmentation and/or instance segmentation may especially be understood as specific forms of image classifications.

The method for training may especially comprise training the neural network in a supervised fashion. The image segmentation system may also comprise preprocessing steps which are applied to an input image provided to the image segmentation system and/or post-processing steps applied to an output of the image segmentation system.

The method for training may be run "from scratch", i.e., with an untrained image segmentation system, or as a finetuning method, wherein the image segmentation system has been trained on other data before training it with one or multiple generated images.

The method for training may preferably also be run with a batch of generated training images, i.e., the method for generating a training image may be run multiple times with different images and/or different replaced pixels in order to determine a batch of training images. Preferably, generated images and images without any replace pixels, e.g., first images, are combined in a batch.

Preferably, supervised training further comprises the steps of:

- Providing the training image as input to the image segmentation system, wherein the image segmentation system determines values characterizing logits for different classes for pixels of the training image;
- Determining a loss value based on a loss function, wherein the loss function comprises a first term that characterizes a logarithm of a sigmoid of logits determined for pixels in the training image, wherein the logarithm of the sigmoid is determined for pixels, which are labeled as anomaly class or indicated as anomalous in the training label map.
- Supervised training the image segmentation system by minimizing the loss value.

The term "to minimize the loss value" may preferably be understood as performing steps such that the loss value is smaller if a same input is provided to the image segmentation system. This may especially be achieved by means of a gradient descent method, especially a stochastic gradient descent method. Alternatively, other training methods are possible as well, e.g., methods based on evolutionary algorithms.

Advantageously, the inventors found that using the logits of the pixels indicated as "anomalous" this way can be understood as training the image segmentation system as a one vs. the rest (OvR) classifier for each pixel, i.e., the system may indicate for each pixel and for each "non-anomalous" class how likely it is that the pixel belongs to the class. If each "non-anomalous" class for a pixel is unlikely (e.g., the logits characterize a probability equal to or below 50%), the pixel can be considered as an anomaly. The inventors found that this advantageously increases the ability of the image segmentation system to correctly indicate if a pixel is anomalous or not.

Even more advantageously, the authors found that the proposed loss function can be applied during finetuning only. This may especially be understood as the method for training not requiring any other ground truth data and only finetuning the image segmentation system based on the loss function, preferably comprising only the first term.

Alternatively, the loss function may also comprise a second term that characterizes a standard loss for semantic segmentation for pixels of the image, which are not indicated as anomalous. For example, a softmax function may be applied to logits of non-anomalous pixels and the second loss term may be characterized or given by a cross entropy loss with respect to the training label map may be determined for non-anomalous pixels, preferably all non-anomalous pixels.

Preferably, the first term characterizes a logarithm of a sigmoid of a predefined amount of largest logits.

Advantageously, the inventors found that limiting the amount of logits for which a logarithm of a sigmoid of the logit is determined further increases the performance of the image segmentation system, i.e., its ability to correctly indicate whether a pixel is anomalous or not.

The amount of logits for which a logarithm of a sigmoid is determined can be considered a hyperparameter of the method. It may be tuned according to any suitable hyperparameter tuning method. The authors found small values to perform particularly well, especially using the three, five, or seven largest logits per pixel. However, other amounts may be suitable as well.

Preferably, the first loss term is characterized by the formula:

$$\mathcal{L}_{\mathrm{ood}} = -\frac{1}{K \cdot N_{\mathrm{ood}}} \sum_{i,j \in \mathrm{ood}} \sum_{k \in S_{i,j}} \log \sigma\left(\lambda_{i,j}^{(k)}\right),$$

wherein $i, j$ are height and width coordinates of a pixel, ood are pixel coordinates of pixels indicated as anomalous, $N_{\mathrm{ood}}$ is the amount of pixels in ood, K is the amount of logits for which to determine a logarithm of a sigmoid, $S_{i,j}$ is a set of the $K$ logits and $\lambda_{i,j}^{(k)}$ is the k-th logit in the set of logits for the pixel at position $i,j$. The first loss term may preferably be multiplied by a factor constituting a further hyperparameter of the method for training. The loss function from which the loss value is determined may be hence characterized by the formula

$$\mathcal{L} = \mathcal{L}_{\mathrm{semseg}} + \lambda_{\mathrm{ood}} \cdot \mathcal{L}_{\mathrm{ood}},$$

wherein $\mathcal{L}_{\mathrm{semseg}}$ characterizes the second loss term and $\lambda_{\mathrm{ood}}$ characterizes the factor.

The loss function may be extended by further terms, e.g., for regularizing the training of the image segmentation system.

Some or all of the preferred embodiments of the method for training may be combined to form another embodiment of the method for training.

In another aspect, the invention concerns a computer-implemented method for determining an output signal, wherein the output signal characterizes a classification of a pixel of an input image as anomalous or not, wherein the method comprises the steps of:

- Providing the input image as input to an image segmentation system, wherein the image segmentation system has been trained with a method according to any one of the previous claims;
- Determining, by the image segmentation system, logits for the pixel;
- Providing a classification of the pixel as anomalous in the output signal if a difference of a largest determined logit and a smallest determined logit is smaller or equal to a predefined threshold and providing a classification of the pixel as non-anomalous in the output signal otherwise.

The term "wherein the image segmentation system has been trained with a method" may be understood as the steps of the method for training being executed as part of the method for determining the output signal. Alternatively, it may also be understood as obtaining an image segmentation system that has been trained as described above, e.g., from a resource on the internet.

Preferably, the image segmentation system determines for a plurality of pixels, preferably for all pixels of the input image, whether a respective pixel is anomalous or not. Even more preferably, pixels being determined as anomalous may be grouped, e.g., by means of a connected components algorithm, in order to determine areas in the image deemed to be anomalous. The grouped areas may be put out in the output signal as well, e.g., by bounding boxes enclosing pixels of a single connected component of anomalous pixels.

For determining a classification of the pixel as anomalous or not, an anomaly score may be determined for the pixel, wherein the anomaly score is preferably characterized by the formula

$$s\left(\lambda_{i,j}\right) = \max_k \lambda_{i,j}^{(k)} - \min_k \lambda_{i,j}^{(k)}.$$

In other words, logits may be determined for all classes the pixel may probably be classified into and a difference of the the largest and smallest logit may then be used as anomaly score. Alternatively, it is also possible to multiply the result of the difference with -1 such that larger anomaly scores correspond to a higher likelihood of the pixel being anomalous. An anomaly score may also be determined for each pixel individually.

The output signal comprising the classification may especially be understood as the output signal comprising or consisting of a value characterizing the classification, e.g., the anomaly score or a binary value indicating whether anomaly score is smaller or equal to a predefined threshold (or equal to or larger to a predefined threshold if the difference is multiplied by -1).

Some or all of the preferred embodiments of the method for determining an output signal may be combined to from another embodiment.

Embodiments of the invention will be discussed with reference to the following figures in more detail. The figures show:

Figure 1  a method for generating a training image and a training label map;

Figure 2  a training system configured for executing a method for training an image segmentation system;

Figure 3  a control system comprising a machine learning system controlling an actuator in its environment;

Figure 4  the control system controlling an at least partially autonomous robot;

Figure 5  the control system controlling a manufacturing machine;

Figure 6    the control system controlling a medical analysis system.

Description of the embodiments

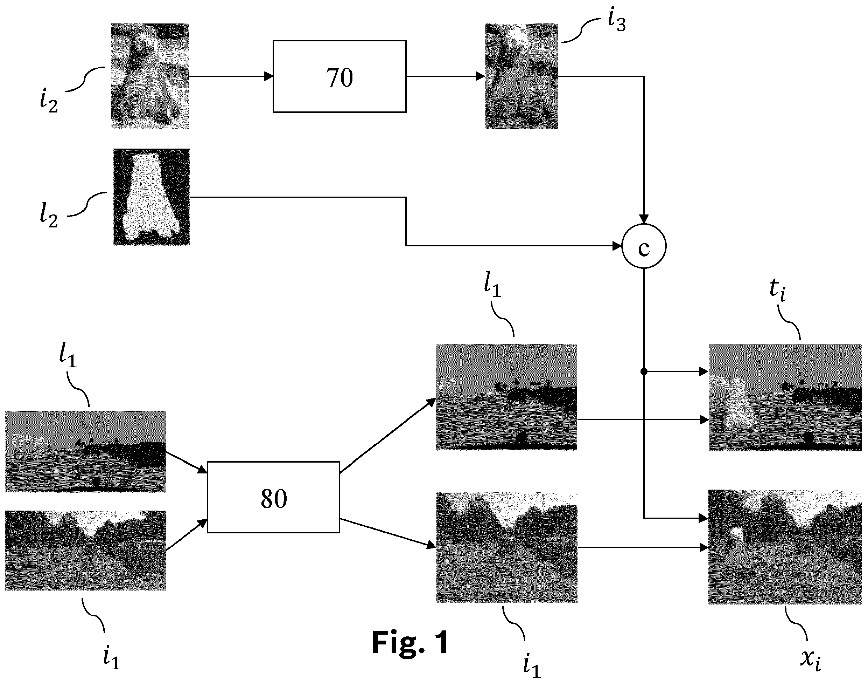

Figure 1 schematically shows a method for generating a training image and a training label map.

The method comprises obtaining a first image ($i_1$) and a first label map ($l_1$) corresponding to the first image ($l_1$) and obtaining a second image ($i_2$) and a second label ($l_2$) map corresponding to the second image ($i_2$). The first image ($i_1$) and/or second image ($i_2$) may be obtained from respective databases of images or may be recorded by a sensor, especially an optical sensor such as a camera. The recording may also be part of the method. Preferably, the first image ($i_1$) and the second image ($i_2$) have different styles, e.g., the color distribution of pixels is significantly different. In the embodiment, the first image ($i_1$) depicts a road scene, e.g., an urban traffic scene, and the second image ($i_2$) comprises a bear, which is typically not seen in an urban traffic scene. The respective label maps ($l_1$, $l_2$) may be obtained by labelling the respective images ($i_1$, $i_2$) by a human or by an automated algorithm, i.e., may be auto-labeled.

The method further comprises determining a third image ($i_3$), wherein the third image is determined by providing the second image ($i_2$) as input to a machine learning system (70), wherein the machine learning system (70) is configured for determining images in the style of the first image ($i_1$) based on provided images.

The term "determining images in the style of the first image based on provided images" may especially be understood in so far as the machine learning system being configured for accepting images as input, wherein the machine learning system then transforms a provided input image into an output image, wherein the output image has a different style from the input image but a similar or same semantic content.

In particular, the machine learning system takes as input the second image ($i_2$, the image of the bear in the embodiment) and provides the third image ($i_3$, the image of the bear with a similarly color distribution as has the urban traffic scene in the first image).

The machine learning system may especially be configured to consist of a neural network comprising a masked noise encoder and a StyleGAN2 for determining the third image ($i_3$).

Based on the second label map ($l_2$) an object from the second image ($i_2$) may then be cut from the third image ($i_3$) in a cutting operation (c). Preferably, the cutting operation selects on object from the second label map ($l_2$) based on connected class labels of an object class (i.e., a connected component of plurality of specific class labels from a same object class).

The first image ($i_1$) and first label map ($l_1$) may be subject to an optional augmentation operation (80), e.g., cropping, resizing, rotation, warping or the like. The result may then again be used as first image ($i_1$) and first label map ($l_1$).

Irrespective of whether an augmentation operation is conducted, the method further comprises determining the training image ($x_i$) by replacing pixels from the first image ($i_1$) with pixels from the third image ($i_3$). In other words, pixels obtained from the cutting operation may then be copied (i.e., overlayed) over pixels from the first image ($i_1$) in order to determine the training image ($x_i$).

The pixels in the first image ($i_1$), which are replaced by pixels from the third image ($i_3$) may be chosen at random. For example, a random position may be chosen in the first image ($i_1$) and the pixels from the third image may be superimposed onto that position such that a center of the pixels from the third image ($i_3$) is located at the random position. In this case, the pixels to be replace in the first image ($i_1$) may be understood be determined implicitly. Alternatively, the pixels to be replaced in the first image ($i_1$) may be chosen based on a class of the first label map ($l_1$). For example, the pixels from the third image ($i_3$) to be pasted onto the first image ($i_1$) constitute pixels of an object and the pixels in the first image ($i_1$) may be chosen such that they represent pixels which characterize parts in the first label map ($l_1$) that can reasonably comprise objects, e.g., free spaces such as roads, sidewalks or the like.

The method further comprises determining the training label ($t_i$) map by replacing class labels from the first label map ($l_1$) with class labels indicating an anomaly class, wherein the class labels in the first label map ($l_1$) are replace for which corresponding pixels in the first image ($i_1$) are replaced. In other words, for the pixels, which are obtained by copying in the training image ($x_i$), the training label map ($t_i$) is determined to comprise class labels of an anomaly class.

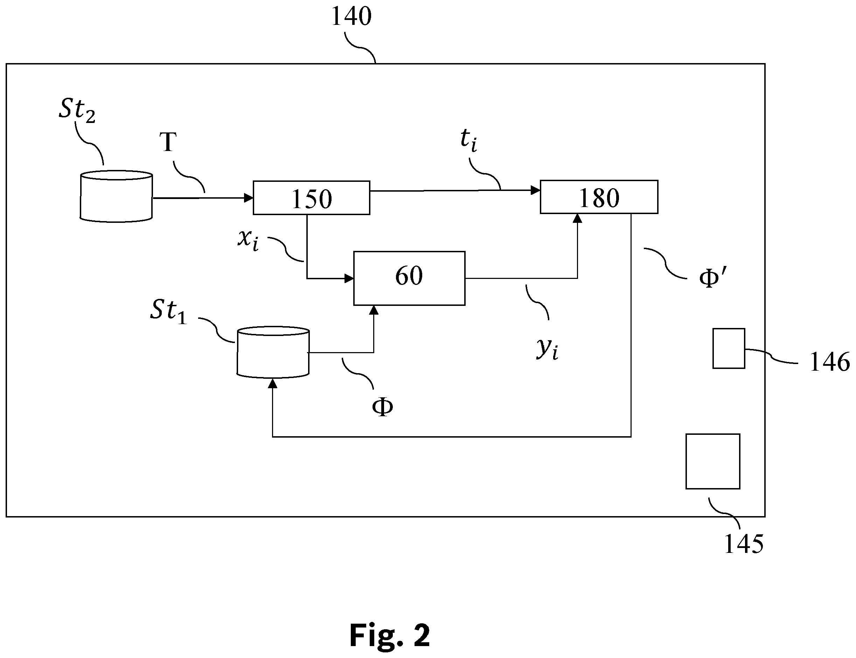

Figure 2 shows an embodiment of a training system (140) for training an image segmentation system (60) by means of a training data set (T). The training data set (T) comprises a plurality of training images ($x_i$) and training label maps ($l_i$), wherein each training image ($x_i$) and training label map ($l_i$) has been obtained by the method depicted in Figure 1. The training images ($x_i$) and training labels ($l_i$) show different content, e.g., by using different first images ($i_1$) and/or different second images ($i_2$) in the method for generating and/or using different locations a cut-out object from the third image ($i_3$) is copied into the first image ($i_1$)

For training, a training data unit (150) accesses a computer-implemented database ($St_2$), the database ($St_2$) providing the training data set (T). The training data unit (150) determines from the training data set (T) preferably randomly at least one training image ($x_i$) and the training label map ($t_i$) corresponding to the training image ($x_i$) and transmits the training image ($x_i$) to the image segmentation system (60). The image segmentation system (60) determines an output signal ($y_i$) based on the training image ($x_i$), wherein the output signal ($y_i$)

characterizes a semantic segmentation and/or instance segmentation of the training image ($x_i$), preferably comprising logits for the different classes for each pixel.

The training label map ($t_i$) and the determined output signal ($y_i$) are transmitted to a modification unit (180).

Based on the training label map ($t_i$) and the determined output signal ($y_i$), the modification unit (180) then determines new parameters ($\Phi'$) for the image segmentation system (60), e.g., new parameters of the neural network comprised by the image segmentation system (60). For this purpose, the modification unit (180) compares the training label map ($t_i$) and the determined output signal ($y_i$) using a loss function, wherein the loss function comprises a first term that characterizes a logarithm of a sigmoid of logits determined for pixels in the training image, wherein the logarithm of the sigmoid is determined for pixels, which are labeled as anomaly class or indicated as anomalous in the training label map. The loss function determines a loss value as output. Preferably, the first loss term is characterized by the formula:

$$\mathcal{L}_{\text{ood}} = -\frac{1}{K \cdot N_{\text{ood}}} \sum_{i,j \in \text{ood}} \sum_{k \in S_{i,j}} \log \sigma\left(\lambda_{i,j}^{(k)}\right),$$

wherein $i, j$ are height and width coordinates of a pixel, ood are pixel coordinates of pixels indicated as anomalous, $N_{\text{ood}}$ is the amount of pixels in ood, K is the amount of logits for which to determine a logarithm of a sigmoid, $S_{i,j}$ is a set of the $K$ logits and $\lambda_{i,j}^{(k)}$ is the k-th logit in the set of logits for the pixel at position $i,j$. Preferably, the first term $\mathcal{L}_{\text{ood}}$ may be understood as the only term of the loss function, i.e., the loss function being the first term. Alternatively, $\mathcal{L}_{\text{ood}}$ may be combined with further terms to form the loss function. For example, the loss function may comprise a second term that characterizes a standard loss for semantic segmentation for pixels of the image, which are not indicated as anomalous. For example, a softmax function may be applied to logits of non-anomalous pixels and the second loss term may be characterized or given by a cross entropy loss with respect to the training label map may be determined for non-anomalous pixels, preferably all non-anomalous pixels.

The first loss term may preferably be multiplied by a factor constituting a further hyperparameter of the method for training. The loss function from which the loss value is determined may be hence characterized by the formula

$$\mathcal{L} = \mathcal{L}_{\text{semseg}} + \lambda_{\text{ood}} \cdot \mathcal{L}_{\text{ood}},$$

wherein $\mathcal{L}_{\text{semseg}}$ characterizes the second loss term and $\lambda_{\text{ood}}$ characterizes the factor.

The loss function may be extended by further terms, e.g., for regularizing the training of the image segmentation system.

The modification unit (180) determines the new parameters ($\Phi'$) based on the loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the loss value falls below a predefined threshold value. Alternatively or additionally, it is also possible that the training is terminated when an average first loss value with respect to a test or validation data set falls below a predefined threshold value. In at least one of the iterations the new parameters ($\Phi'$) determined in a previous iteration are used as parameters ($\Phi$) of the image segmentation system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

In further embodiments (not shown) the training image ($x_i$) and training label map ($l_i$) may not be obtained from a database but may be generated in each iteration of training. In other words, the training image ($x_i$) and training label map ($l_1$) may be generated on the fly.

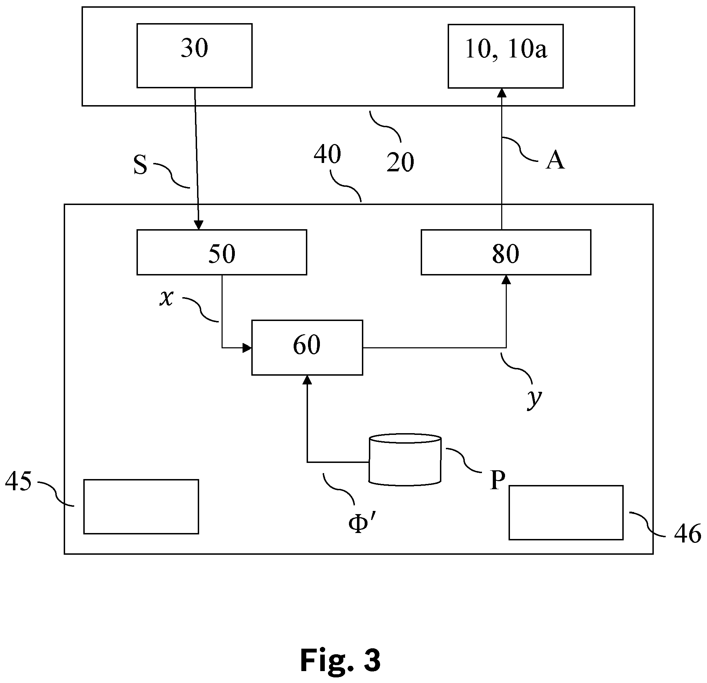

Figure 3 shows an embodiment of a control system (40) controlling an actuator (10) in its environment (20) based on an output of the image segmentation system (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input images (x). Alternatively, in case of no receiving unit (50), each sensor signal (S) may directly be taken as an input image (x). The input image (x) may, for example, be given as an excerpt from the sensor signal (S). Alternatively, the sensor signal (S) may be processed to yield the input image *(x)*. In other words, the input signal *(x)* is provided in accordance with the sensor signal (S).

The input image (x) is then passed on to the image segmentation system (60).

The image segmentation system (60) is parametrized by parameters (Φ), which are stored in and provided by a parameter storage ($St_1$).

The image segmentation system (60) determines an output signal (y) from the input image (x). The output signal (y) a classification of a pixel, preferable a respective classification for each pixel, of the input image (x), wherein the classification characterizes whether the pixel is anomalous. The output signal (y) is transmitted to an optional conversion unit (80), which converts the output signal (y) anomaly scores and determines the control signals (A) based on the classification. Alternatively, the output signal (y) may be used directly as control signal (A).

The classification is preferably determined by the image segmentation system (60) by first determining an anomaly score for each pixel to be classified. The anomaly score may preferably be determined according to the formula

$$s\left(\lambda_{i,j}\right) = \max_k \lambda_{i,j}^{(k)} - \min_k \lambda_{i,j}^{(k)},$$

wherein $\lambda_{i,j}^{(k)}$ is the k-th logit $\lambda$ determined for the pixel of the input image (x) at position *i,j* in the input image *(x).*

The anomaly score may then be compared to a predefined threshold and the pixel may be classified as anomalous if the anomaly score is equal to or below the predefined threshold. Alternatively, the anomaly score may be multiplied by -1 and the pixel may be classified as anomalous if the result of the multiplication is equal to or above the predefined threshold. The threshold may be understood as a hyperparameter of the method for training.

If a pixel is not classified as anomalous, it may preferably be assigned a class indicating a normal pixel. This may be achieved by, e.g., assigning the pixel a class corresponding to the highest logit determined by the image segmentation system (60).

The control signals (A) are then transmitted to the actuator (10) for controlling the actuator (10) accordingly.

The actuator (10) receives control signals (A), is controlled accordingly and carries out an action corresponding to the control signal (A). The actuator (10) may comprise a control logic which transforms the control signal (A) into a further control signal, which is then used to control the actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

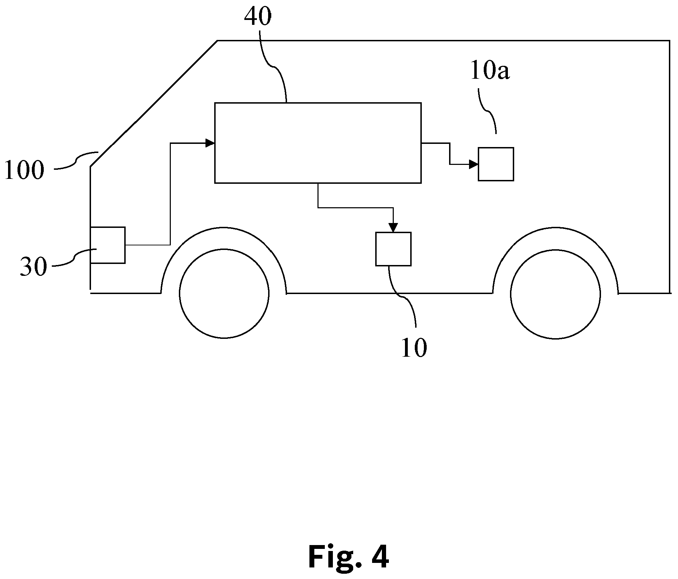

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the at least partially autonomous robot (100).

The image segmentation system (60) may be configured to perform a semantic segmentation or instance segmentation of the vicinity of the at least partially autonomous robot based (100) on the input image (x). In case anomalous regions (i.e., pixels or connected components of pixels classified as anomalous) are detected in the input image (x), the control signal (A) may be determined in accordance with this information, for example to avoid a path of the at least partially autonomous robot (100) to lead through the anomalous regions or to avoid a path of the at least partially autonomous robot (100) to come closer to the anomalous regions than a predefined threshold.

The actuator (10), which is preferably integrated in the vehicle (100), may be given by a brake, a propulsion system, an engine, a drivetrain, or a steering of the vehicle (100).

Alternatively or additionally, the control signal (A) may also be used to control the display (10a), e.g., for displaying the anomalous pixels detected by the image segmentation system (60). It is also possible that the control signal (A) may control the display (10a) such that it produces a warning signal if the vehicle (100) is close to a region comprising anomalous pixels. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

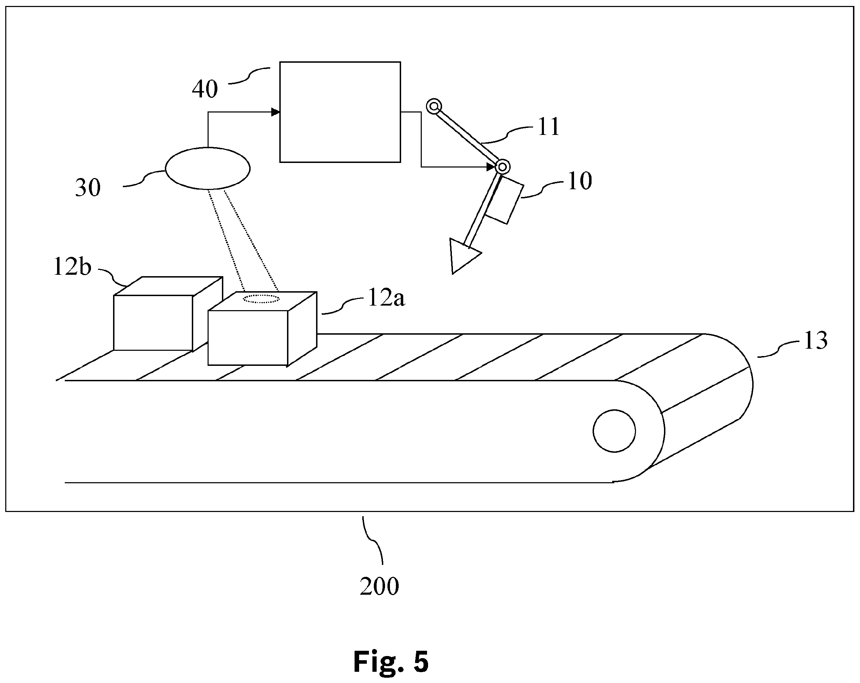

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device (13), e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The image segmentation system (60) may determine parts of the input image (x) that comprise the manufactured product (12) device. The actuator (10) may then be controlled depending on a position of the manufactured product (12) for a subsequent manufacturing step of the manufactured product (12). For example, the actuator (10) may be controlled to cut the manufactured product at a specific location of the manufactured product itself. If the output signal (y) determines the existence of anomalous pixels on the transportation device (13) and/or a manufactured product (12), operation of the machine may be stopped and/or a human operator may be hailed to assess the matter. Alternatively, if the anomaly is detected on pixels belonging to a manufactured product, the actuator (10) may then be controlled as to remove the manufactured product from the transportation device.

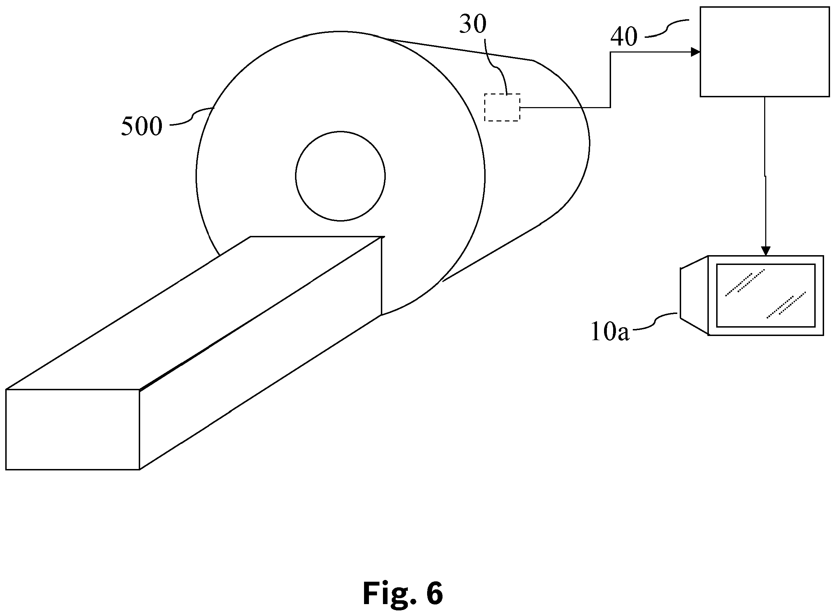

Figure 6 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The image segmentation system (60) may be configured to detect different types of tissue in the sensed image, e.g., by classifying the tissue displayed in the image into either malignant or benign tissue. This may be done by means of a semantic segmentation of the input image (x) by the image segmentation system (60). The control signal (A) may then be determined to cause the display (10a) to display different tissues, e.g., by displaying the input image (x) and coloring different regions of identical tissue types in a same color. The control signal (A) may further be chosen to color anomalous regions in a different color as to direct a physicians attention to the anomalous areas and inspect them in detail.

In further embodiments (not shown) the imaging system (500) may be used for non-medical purposes, e.g., to determine material properties of a workpiece. In these embodiments, the image segmentation system (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

## Claims

1. Computer-implemented method for generating a training image ($x_i$) and a training label map ($t_i$) for training and/or testing an image segmentation system (60), wherein the method comprises the steps of:

   • Obtaining a first image ($i_1$) and a first label map ($l_1$) corresponding to the first image ($l_1$) and obtaining a second image ($i_2$) and a second label ($l_2$) map corresponding to the second image ($i_2$);
   • Determining a third image ($i_3$), wherein the third image is determined by providing the second image ($i_2$) as input to a machine learning system (70), wherein the machine learning system (70) is configured for determining images in the style of the first image ($i_1$) based on provided images;
   • Determining the training image ($x_i$) by replacing pixels from the first image ($i_1$) with pixels from the third image ($i_3$), wherein the pixels from the third image ($i_3$) are determined based on a class from the second label map ($l_2$);
   • Determining the training label ($t_i$) map by replacing class labels from the first label map ($l_1$) with class labels indicating an anomaly class, wherein the class labels in the first label map ($l_1$) are replaced for which corresponding pixels in the first image ($i_1$) are replaced.

2. Method according to claim 1, wherein replacing class labels from the first label map is achieved by replacing class labels from the first label map with class labels from the second label map, wherein the class labels from the second label map are used for replacement for which corresponding pixels have been used as replacement in the first image, wherein the replaced class labels in the first label map are further indicated as resulting from replacement.

3. Method according to any one of the previous claims, wherein the first image is transformed in an augmentation operation before determining the training image.

**4.** Method according to any one of the previous claims, wherein the machine learning system determines its output based on providing its input to a masked noise encoder of the machine learning system and providing an output of the masked noise encoder to a StyleGAN2.

**5.** Method according to any one of the previous claims, wherein the first image is comprised in a first dataset of first images and the machine learning system is trained to transfer input images into a style of the first images.

**6.** Computer-implemented method for training an image segmentation system (60), wherein the method comprises the steps of:

• Generating a training image ($x_i$) and a corresponding training label map ($t_i$) according to the method of any one of the previous claims;
• Supervised training the image segmentation system (60) with the generated training image ($x_i$) and the training label map ($t_i$).

**7.** Method according to claim 6, wherein supervised training further comprises the steps of:

• Providing the training image ($x_i$) as input to the image segmentation system (60), wherein the image segmentation system (60) determines values characterizing logits for different classes for pixels of the training image ($x_i$);
• Determining a loss value based on a loss function, wherein the loss function comprises a first term that characterizes a logarithm of a sigmoid of logits determined for pixels in the training image ($x_i$), wherein the logarithm of the sigmoid is determined for pixels, which are labeled as anomaly class or indicated as anomalous in the training label map ($t_i$); and
• Supervised training the image segmentation system (60) by minimizing the loss value.

**8.** Method according to claim 7, wherein the first term characterizes a logarithm of a sigmoid of a predefined amount of largest logits.

**9.** Method according to claim 7 or 8, wherein the first loss term is **characterized by** the formula:

$$\mathcal{L}_{\text{ood}} = -\frac{1}{K \cdot N_{\text{ood}}} \sum_{i,j \in \text{ood}} \sum_{k \in S_{i,i}} \log \sigma\left(\lambda_{i,j}^{(k)}\right),$$

wherein $i, j$ are height and width coordinates of a pixel, ood are pixel coordinates of pixels indicated as anomalous, $N_{\text{ood}}$ is the amount of pixels in ood, K is the amount of logits for which to determine a logarithm of a sigmoid, $S_{i,j}$ is a set of the K logits and $\lambda_{i.i}^{(k)}$ is the k-th logit in the set of logits for the pixel at position i, j.

**10.** Computer-implemented method for determining an output signal (y), wherein the output signal (y) characterizes a classification of a pixel of an input image (x) as anomalous or not, wherein the method comprises the steps of:

• Providing the input image (x) as input to an image segmentation system (60), wherein the image segmentation system (60) has been trained with a method according to any one of the previous claims 6 to 9;
• Determining, by the image segmentation system (60), logits for the pixel; and
• Providing a classification of the pixel as anomalous in the output signal (y) if a difference of a largest determined logit and a smallest determined logit is smaller or equal to a predefined threshold and providing a classification of the pixel as non-anomalous in the output signal (y) otherwise.

**11.** Training system (140), which is configured to carry out the training method according to any one of the claims 6 to 9.

**12.** Control system (40), which is configured to carry out the method according to claim 10, wherein the control system (40) determines a control signal (A) based on the output signal (y), wherein the control signal (A) is configured to control an actuator (10) and/or a display (10a).

**13.** Computer program that is configured to cause a computer to carry out the method according to any one of the claims 1 to 10 with all of its steps if the computer program is carried out by a processor (45, 145).

**14.** Machine-readable storage medium (46, 146) on which the computer program according to claim 13 is stored.

**Patentansprüche**

**1.** Computerimplementiertes Verfahren zum Erzeugen eines Schulungsbildes ($x_i$) und einer Schulungskennzeichnungskarte (ti) zum Schulen und/oder Testen eines Bildsegmentierungssystems (60), wobei das Verfahren die folgenden Schritte umfasst:

• Erhalten eines ersten Bildes ($i_1$) und einer ersten Kennzeichnungskarte ($l_1$), die dem ersten Bild ($l_1$) entspricht, und Erhalten eines zweiten Bildes ($i_2$) und einer zweiten Kennzeichnungskarte ($l_2$), die dem zweiten Bild ($i2$) entspricht;
• Bestimmen eines dritten Bildes ($i_3$), wobei das dritte Bild durch Bereitstellen des zweiten Bildes ($i_2$) als Eingabe in ein Maschinenlernsystem (70) bestimmt wird, wobei das Maschinenlernsystem (70) konfiguriert ist, Bilder in dem Stil des ersten Bildes ($i_1$) anhand von bereitgestellten Bilden zu bestimmen;
• Bestimmen des Schulungsbildes (xi) durch Ersetzen von Pixeln von dem ersten Bild (i1) durch Pixel von dem dritten Bild (i3), wobei die Pixel von dem dritten Bild (i3) anhand einer Klasse von der zweiten Kennzeichnungskarte (12) bestimmt werden;
• Bestimmen der Schulungskennzeichnungskarte ($t_i$) durch Ersetzen von Klassenkennzeichnungen von der ersten Kennzeichnungskarte ($l_1$) durch Klassenkennzeichnungen, die eine Anomalieklasse angeben, wobei die Klassenkennzeichnungen in der ersten Kennzeichnungskarte ($l_1$) ersetzt werden, für die entsprechende Pixel in dem ersten Bild ($i_1$) ersetzt werden.

2. Verfahren nach Anspruch 1, wobei das Ersetzen von Klassenkennzeichnungen von der ersten Kennzeichnungskarte durch Ersetzen von Klassenkennzeichnungen von der ersten Kennzeichnungskarte durch Klassenkennzeichnungen von der zweiten Kennzeichnungskarte erreicht wird, wobei die Klassenkennzeichnungen von der zweiten Kennzeichnungskarte für das Ersetzen verwendet werden, für das entsprechende Pixel als Ersatz in dem ersten Bild verwendet wurden, wobei die ersetzten Klassenkennzeichnungen in der ersten Kennzeichnungskarte ferner als resultierend aus der Ersetzung angegeben werden.

3. Verfahren nach einem der vorhergehenden Ansprüche, wobei das erste Bild in einem Vergrößerungsvorgang umgewandelt wird, bevor das Schulungsbild bestimmt wird.

4. Verfahren nach einem der vorhergehenden Ansprüche, wobei das Maschinenlernsystem seine Ausgabe anhand des Bereitstellens seiner Eingabe für einen maskierten Rauschcodierer des Maschinenlernsystems und des Bereitstellens einer Ausgabe des maskierten Rauschcodierers für ein StyleGAN2 bestimmt.

5. Verfahren nach einem der vorhergehenden Ansprüche, wobei das erste Bild in einer ersten Datengruppe erster Bilder enthalten ist und das Maschinenlernsystem geschult ist, Eingangsbilder in einen Stil der ersten Bilder zu übertragen.

6. Computerimplementiertes Verfahren zum Schulen eines Bildsegmentierungssystems (60), wobei das Verfahren die folgenden Schritte umfasst:

• Erzeugen eines Schulungsbildes ($x_i$) und einer entsprechenden Schulungskennzeichnungskarte ($t_i$) gemäß dem Verfahren nach einem der vorhergehenden Ansprüche;
• überwachtes Schulen des Bildsegmentierungssystems (60) mit dem erzeugten Schulungsbild ($x_i$) und der Schulungskennzeichnungskarte ($t_i$).

7. Verfahren nach Anspruch 6, wobei das überwachte Schulen ferner die folgenden Schritte umfasst:

• Bereitstellen des Schulungsbildes ($x_i$) als Eingabe in das Bildsegmentierungssystem (60), wobei das Bildsegmentierungssystem (60) Werte bestimmt, die Logits für verschiedene Klassen von Pixeln des Schulungsbildes ($x_i$) kennzeichnen;
• Bestimmen eines Verlustwertes anhand einer Verlustfunktion, wobei die Verlustfunktion einen ersten Ausdruck umfasst, der einen Logarithmus eines Sigmoids von Logits, die für Pixel in dem Schulungsbild ($x_i$) bestimmt wurden, umfasst, wobei der Logarithmus des Sigmoids für Pixel bestimmt wird, die als Anomalieklasse bezeichnet sind, oder als anomal in der Schulungskennzeichnungskarte (ti) angegeben sind; und
• überwachtes Schulen des Bildsegmentierungssystems (60) durch Minimieren des Verlustwertes.

8. Verfahren nach Anspruch 7, wobei der erste Ausdruck einen Logarithmus eines Sigmoids einer vordefinierten Anzahl größter Logits bezeichnet.

9. Verfahren nach Anspruch 7 oder 8, wobei der erste Verlustausdruck durch die folgende Formel gekennzeichnet ist:

$$\mathcal{L}_{\mathrm{ood}} = -\frac{1}{K \cdot N_{\mathrm{ood}}} \sum_{i,j \in \mathrm{ood}} \sum_{k \in S_{i,i}} \log \sigma\left(\lambda_{i,j}^{(k)}\right),$$

wobei i, j Höhen- und Breitenkoordinaten eines Pixels sind, ood Pixelkoordinaten von Pixeln, die als anomal angegeben sind, sind, $N_{\mathrm{ood}}$ die Anzahl von Pixeln in ood ist, K die Anzahl von Logits ist, für die ein Logarithmus eines Sigmoids zu bestimmen ist,

$S_{i,j}$ eine Gruppe der K Logits ist und $\lambda_{i,i}^{(k)}$ das k-te Logit in der Gruppe von Logits für das Pixel an der Position i, j ist.

10. Computerimplementiertes Verfahren zum Bestimmen eines Ausgangssignals (y), wobei das Ausgangssignal (y) eine Einordnung eines Pixels eines Eingangsbildes (x) als anomal oder nicht bezeichnet, wobei das Verfahren die folgenden Schritte umfasst:

    • Bereitstellen des Eingangsbildes (x) als Eingabe in ein Bildsegmentierungssystem (60), wobei das Bildsegmentierungssystem (60) mit einem Verfahren nach einem der vorhergehenden Ansprüche 6 bis 9 geschult wurde;
    • Bestimmen durch das Bildsegmentierungssystem (60) von Logits für die Pixel; und
    • Bereitstellen einer Einordnung des Pixels als anomal in dem Ausgangssignal (y), wenn ein Unterschied eines größten bestimmten Logits und eines kleinsten bestimmten Logits kleiner als ein vordefinierter Schwellenwert oder gleich diesem ist und Bereitstellen einer Einordnung der Pixel als nicht anomal in dem Ausgangssignal (y) anderenfalls.

11. Schulungssystem (140), das konfiguriert ist, das Schulungsverfahren nach einem der Ansprüche 6 bis 9 auszuführen.

12. Steuersystem (40), das konfiguriert ist, das Verfahren nach Anspruch 10 auszuführen, wobei das Steuersystem (40) ein Steuersignal (A) anhand des Ausgangssignals (y) bestimmt, wobei das Steuersignal (A) konfiguriert ist, ein Betätigungselement (10) und/oder eine Anzeige (10a) zu steuern.

13. Computerprogramm, dass konfiguriert ist, zu bewirken, dass ein Computer das Verfahren nach einem der Ansprüche 1 bis 10 mit all seinen Schritten ausführt, wenn das Computerprogramm durch einen Prozessor (45, 145) ausgeführt wird.

14. Maschinenlesbares Speichermedium (46, 146), auf dem das Computerprogramm nach Anspruch 13 gespeichert ist.

**Revendications**

1. Procédé mis en œuvre par ordinateur pour générer une image d'apprentissage ($x_i$) et une carte d'étiquettes d'apprentissage ($t_i$) pour l'apprentissage et/ou le test d'un système de segmentation d'images (60), le procédé comprenant les étapes de :

    • l'obtention d'une première image ($i_1$) et d'une première carte d'étiquettes ($l_1$) correspondant à la première image ($l_1$) et l'obtention d'une deuxième image ($i_2$) et d'une deuxième carte d'étiquettes ($l_2$) correspondant à la deuxième image ($i_2$) ;
    • la détermination d'une troisième image ($i_3$), la troisième image étant déterminée en fournissant la deuxième image ($i_2$) en entrée à un système d'apprentissage automatique (70), le système d'apprentissage automatique (70) étant configuré pour déterminer des images dans le style de la première image ($i_1$) sur la base d'images fournies ;
    • la détermination de l'image d'apprentissage ($x_i$) en remplaçant des pixels de la première image ($i_1$) par des pixels de la troisième image ($i_3$), les pixels de la troisième image ($i_3$) étant déterminés sur la base d'une classe provenant de la deuxième carte d'étiquette ($l_2$) ;
    • la détermination de la carte d'étiquettes d'apprentissage ($t_i$) en remplaçant les étiquettes de classe de la première carte d'étiquettes ($l_1$) par des étiquettes de classe indiquant une classe d'anomalie, les étiquettes de classe de la première carte d'étiquettes ($l_1$) étant remplacées pour lesquelles des pixels correspondants de la première image ($i_1$) sont remplacés.

2. Procédé selon la revendication 1, le remplacement des étiquettes de classe de la première carte d'étiquettes étant réalisé en remplaçant les étiquettes de classe de la première carte d'étiquettes par des étiquettes de classe de la deuxième carte d'étiquettes, les étiquettes de classe de la deuxième carte d'étiquettes étant utilisées pour le remplacement pour lesquelles des pixels correspondants ont été utilisés comme remplacement dans la première image, les étiquettes de classe remplacées dans la première carte d'étiquettes étant en outre indiquées comme résultant du remplacement.

3. Procédé selon l'une quelconque des revendications précédentes, la première image étant transformée dans une opération d'augmentation avant de déterminer l'image d'apprentissage.

4. Procédé selon l'une quelconque des revendications précédentes, le système d'apprentissage automatique déterminant sa sortie en fournissant son entrée à un codeur de bruit masqué du système d'apprentissage automatique et en fournissant une sortie du codeur de bruit masqué à un réseau StyleGAN2.

5. Procédé selon l'une quelconque des revendications précédentes, la première image étant comprise dans un premier ensemble de données de premières images et le système d'apprentissage automatique étant entraîné à transférer des images d'entrée dans un style des premières images.

6. Procédé mis en œuvre par ordinateur pour l'apprentissage d'un système de segmentation d'image (60), le procédé comprenant les étapes de :

• la génération d'une image d'apprentissage (x$_i$) et d'une carte d'étiquettes d'apprentissage correspondante (t$_i$) conformément au procédé selon l'une quelconque des revendications précédentes ;
• l'apprentissage supervisé du système de segmentation d'image (60) avec l'image d'apprentissage générée (x$_i$) et la carte d'étiquettes d'apprentissage (t$_i$).

7. Procédé selon la revendication 6, un apprentissage supervisé comprenant en outre les étapes de :

• la fourniture de l'image d'apprentissage (x$_i$) comme entrée au système de segmentation d'images (60), le système de segmentation d'images (60) déterminant des valeurs caractérisant des logits pour différentes classes pour des pixels de l'image d'apprentissage (x$_i$) ;
• la détermination d'une valeur de perte basée sur une fonction de perte, la fonction de perte comprenant un premier terme qui caractérise un logarithme d'un sigmoïde de logits déterminés pour des pixels dans l'image d'apprentissage (x$_i$), le logarithme du sigmoïde étant déterminé pour des pixels, qui sont étiquetés comme classe d'anomalie ou indiqués comme anormaux dans la carte d'étiquettes d'apprentissage (t$_i$) ; et
• l'apprentissage supervisé du système de segmentation d'image (60) en minimisant la valeur de perte.

8. Procédé selon la revendication 7, le premier terme caractérisant un logarithme d'un sigmoïde d'une quantité prédéfinie de logits les plus importants.

9. Procédé selon la revendication 7 ou 8, le premier terme de perte étant **caractérisé par** la formule :

$$\mathcal{L}_{\text{ood}} = -\frac{1}{K \cdot N_{\text{ood}}} \sum_{i,j \in \text{ood}} \sum_{k \in S_{i,i}} \log \sigma\left(\lambda_{i,j}^{(k)}\right),$$

i, j étant des coordonnées de hauteur et de largeur d'un pixel, ood étant des coordonnées de pixels indiqués comme anormaux, N$_{\text{ood}}$ étant la quantité de pixels dans ood, K étant la quantité de logits pour laquelle on détermine un logarithme d'un sigmoïde, S$_{i,j}$ étant un ensemble des K logits et $\lambda_{i,i}^{(k)}$ étant le k-

ième logit dans l'ensemble des logits pour le pixel en position i, j.

10. Procédé mis en œuvre par ordinateur de détermination d'un signal de sortie (y), le signal de sortie (y) caractérisant une classification d'un pixel d'une image d'entrée (x) comme anormal ou non, le procédé comprenant les étapes de :

• la fourniture de l'image d'entrée (x) comme entrée à un système de segmentation d'image (60), le système de segmentation d'image (60) ayant été entraîné par un procédé selon l'une quelconque des revendications 6 à 9 précédentes ;
• la détermination, par le système de segmentation d'image (60), de logits pour le pixel ; et
• la fourniture d'une classification du pixel comme anormal dans le signal de sortie (y) si une différence entre un logit déterminé le plus grand et un logit déterminé le plus petit est inférieure ou égale à un seuil prédéfini et la fourniture d'une classification du pixel comme non anormal dans le signal de sortie (y) sinon.

11. Système d'apprentissage (140), configuré pour mettre en œuvre le procédé d'apprentissage selon l'une quelconque des revendications 6 à 9.

12. Système de commande (40), configuré pour mettre en œuvre le procédé selon la revendication 10, le système de commande (40) déterminant un signal de commande (A) sur la base du signal de sortie (y), le signal de commande (A) étant configuré pour commander un actionneur (10) et/ou un dispositif d'affichage (10a).

13. Programme informatique configuré pour amener un ordinateur à mettre en œuvre le procédé selon l'une quelconque des revendications 1 à 10 avec toutes ses étapes si le programme informatique est mis en œuvre par un processeur (45, 145).

14. Support de stockage lisible par machine (46, 146) sur lequel est stocké le programme informatique selon la revendication 13.

Fig. 1

EP 4 502 939 B1

**Fig. 2**

**Fig. 3**

Fig. 4

**Fig. 5**

EP 4 502 939 B1

**Fig. 6**

EP 4 502 939 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIAN et al.** *Pixel-wise energy-biased abstention learning for anomaly segmentation on complex urban driving scenes*, 2022, https://arxiv.org/pdf/2111.12264.pdf
- **NAYAL et al.** *RbA: Segmenting Unknown Regions Rejected by All*, 2022, https://arxiv.org/pdf/2211.14293.pdf
- **LI et al.** *Intra- & Extra-Source Exemplar-Based Style Synthesis for Improved Domain Generalization*, 2023, https://arxiv.org/pdf/2307.00648.pdf

- **MARWANE HARIAT et al.** *Learning to generate training datasets for robust semantic segmentation*, https://arxiv.org/html/2308.02535v4
- **FERNANDEZ VIRGINIA et al.** *Can segmentation models be trained with fully synthetically generated data?*, https://arxiv.org/ abs/2209.08256
- **MATEJ GRICIC et al.** Hybrid open-set segmentation with synthetic negative data. *arXiv:2301.08555*, 2023